(19) Europäisches Patentamt
European Patent Office
Office européen des brevets

(11) **EP 2 976 719 B1**

(12) **EUROPEAN PATENT SPECIFICATION**

(45) Date of publication and mention of the grant of the patent:
**23.02.2022 Bulletin 2022/08**

(21) Application number: **14768301.5**

(22) Date of filing: **13.03.2014**

(51) International Patent Classification (IPC):
**G06F 16/958** *(2019.01)*    **G06F 16/957** *(2019.01)*

(52) Cooperative Patent Classification (CPC):
**G06F 16/9577; G06F 16/958**

(86) International application number:
**PCT/US2014/025385**

(87) International publication number:
**WO 2014/151292 (25.09.2014 Gazette 2014/39)**

(54) **ESTIMATING VISIBILITY OF CONTENT ITEMS**

SICHTBARKEIT SCHÄTZUNG VON INHALTSELEMENTEN

ESTIMATION DE LA VISIBILITÉ D'ÉLÉMENTS DE CONTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2013 US 201361803060 P**
**28.03.2013 US 201313852568**

(43) Date of publication of application:
**27.01.2016 Bulletin 2016/04**

(73) Proprietor: **Google LLC**
**Mountain View, CA 94043 (US)**

(72) Inventors:
• **MOSTOWY, Walter A.**
**Mountain View, California 94043 (US)**
• **ZHANG, Peng**
**Mountain View, California 94043 (US)**
• **SHAW, Jeffrey E.**
**Mountain View, California 94043 (US)**

(74) Representative: **Pediani, Steven Peter et al**
**Marks & Clerk LLP**
**1 New York Street**
**Manchester M1 4HD (GB)**

(56) References cited:
**WO-A2-2011/072048      KR-A- 20040 076 649**
**US-A1- 2005 188 298      US-A1- 2006 026 526**
**US-A1- 2009 063 989      US-A1- 2010 217 666**
**US-A1- 2011 029 393      US-A1- 2011 196 735**
**US-A1- 2012 079 366**

• **Anonymous: "Window outerWidth and outerHeight properties", , 6 March 2013 (2013-03-06), XP055432310, Retrieved from the Internet: URL:https://web.archive.org/web/2013030613 2235/https://www.w3schools.com/jsref/prop_ win_outerheight.asp [retrieved on 2017-12-06]**

## Description

BACKGROUND

This specification relates to information presentation.

The Internet provides access to a wide variety of resources and other content. For example, video and/or audio files, as well as webpages for particular subjects or particular news articles, are accessible as resources over the Internet. Access to the Internet as well provides opportunities to retrieve and present other content (e.g., advertisements) to a user. The other content can be provided to the user on a personal computer (PC), a smartphone, a laptop computer, a tablet computer, or other user device.

Visibility of content presented on the user device can depend on the type of user device and the position on the screen in which the content is displayed. Visibility can also depend on a type of browser or other application by which the content is presented.

Patent application WO 2011/072048 A2 discloses systems and methods for recording impression events of Ad content on a webpage. An example method renders on a display of a computer device a webpage accessible over a network. The webpage includes at least one Ad unit. Then Ad tag information associated with the at least one Ad unit and browser viewport information (display location and size information) is retrieved. The occurrence of an Ad placement event is determined if based on the comparison a predefined percentage of the Ad unit is within the browser viewport. The recorded Ad placement event is transmitted to a previously designated server over the network.

Patent application US 2011/0196735 A1 relates to a system and method for measuring effectiveness of electronically presented advertising.

Patent application US 2012/0079366 A1 relates to measurement of content placement effectiveness over web pages and like media.

Patent application US 2011/0029393 A1 relates to a method and system for tracking interaction and view information for online advertising.

SUMMARY

According to aspects of the present disclosure, a computer-implemented method for determining content visibility, a corresponding computer program product and a corresponding system are provided according to the independent claims. Preferred embodiments are recited in the dependent claims.

In general, one example described in this specification can be implemented in methods that include a computer-implemented method for determining content visibility when a content item is included in a cross-domain iframe. The method includes determining a first estimate of a size of a webpage viewing area of a viewport associated with a browser including reading an outer bound for a size of the viewport. The method further includes determining a second estimate for a size of a content item for display in the webpage viewing area, including reading iframe inside measurements for the iframe from a browser. The method further includes determining content item visibility including determining a location of the content item relative to the webpage viewing area by reading a location of the viewport and the iframe in screen coordinates. The method further includes reporting the visibility.

These and other examples can each optionally include one or more of the following features. Determining the first estimate can include subtracting from a size of the webpage viewing area an estimated size of one or more chrome elements.

Determining content item visibility can further include compensating for an estimated size of the one or more chrome elements in the viewport. Determining the first estimate can include subtracting an estimated size of a browser header from the size of the viewport. Determining the first estimate can include subtracting an estimated size for a browser header and a scrollbar. Determining the first estimate can further include performing a statistical analysis to determine an average size of the one or more chrome elements. Determining the second estimate can include approximating the size of the content item as being a same size as an inside portion of the iframe. Determining the location of the content item can further include using an API of the browser to locate the viewport and the iframe in screen coordinates. The browser is a Firefox browser. Determining content item visibility can further include calculating how much of the content item is visible by determining an area of overlap of two rectangles, the first rectangle defined by the location of the viewport and the estimate of the webpage viewing area, and the second rectangle defined by the location of the iframe and the size of the content item. Reporting the visibility further can include reporting to a content sponsor whether the content item was visible when presented to a user in association with a delivery of the content item to the cross-domain iframe. The method can further include determining the content item is being displayed in a cross-domain iframe. The content item can be an advertisement.

In general, another example described in this specification can be implemented in computer program products that include a computer program product tangibly embodied in a computer-readable storage device and comprising instructions. The instructions, when executed by one or more processors, cause the processor to: determine a first estimate of a size of a webpage viewing area of a viewport associated with a browser including reading an outer bound for a size of the viewport; determine a second estimate for a size of a content item for display in the webpage viewing area, including reading iframe inside measurements for the iframe from a browser; determine content item visibility including determining a location of the content item relative to the webpage viewing area by reading a location of the viewport and the iframe in screen coordinates; and report the visibility.

These and other examples can each optionally include one or more of the following features. Determining the first estimate can include subtracting from a size of the webpage viewing area an estimated size of one or more chrome elements. Determining content item visibility can further include compensating for an estimated size of the one or more chrome elements in the viewport. Determining the first estimate can include subtracting an estimated size of a browser header from the size of the viewport.

In general, another example described in this specification can be implemented in systems, including a system comprising one or more processors and one or more memory elements including instructions. The instructions, when executed, cause the one or more processors to: determine a first estimate of a size of a webpage viewing area of a viewport associated with a browser including reading an outer bound for a size of the viewport; determine a second estimate for a size of a content item for display in the webpage viewing area, including reading iframe inside measurements for the iframe from a browser; determine content item visibility including determining a location of the content item relative to the webpage viewing area by reading a location of the viewport and the iframe in screen coordinates; and report the visibility.

These and other examples can each optionally include one or more of the following features. Determining the first estimate can include subtracting from a size of the webpage viewing area an estimated size of one or more chrome elements. Determining content item visibility can further include compensating for an estimated size of the one or more chrome elements in the viewport.

Particular implementations may realize none, one or more of the following advantages. Estimates and/or measurements can be made for viewport size and the position of a content item (e.g., an advertisement) within the viewport from inside a cross-domain frame (e.g., iFrame). The measurements can be made on certain browsers without cross-domain frame communications with a top window. Determining when content items (e.g., advertisements) are visible can increase marketplace efficiency. Brand-related content sponsors (e.g., advertisers) explicitly interested in views of content items may be willing to pay more for oft-viewed content item placements. Estimating visibility of content items can be made without relying on publishers to voluntarily deploy any technology themselves, as the information can be determined directly. Calculations associated with estimating/measuring content item visibility can occur without significantly taxing resources or browser performance, and without relying on technologies in decline (e.g., Flash).

The details of one or more implementations of the subject matter described in this specification are set forth in the accompanying drawings and the description below.

Other features, aspects, and advantages of the subject matter will become apparent from the description, the drawings, and the claims.

BRIEF DESCRIPTION OF THE DRAWINGS

FIG. 1 is a block diagram of an example environment for delivering content.
FIG. 2 shows an example browser window and elements contained within.
FIG. 3 shows an example screen area that contains a browser window.
FIG. 4 is a flowchart of an example process for determining content visibility for a content item included in a cross-domain iframe.
FIG. 5 is a block diagram of an example computer system that can be used to implement the methods, systems and processes described in this disclosure.

Like reference numbers and designations in the various drawings indicate like elements.

DETAILED DESCRIPTION

This document describes methods, processes and systems for estimating visibility of content items, e.g., when direct measurements are not possible. For example, some existing conventional techniques can involve direct measurements, such as measurements from same-domain frames or other direct measurement techniques. The techniques described in this document can simulate a direct measurement, including using estimations as needed, e.g., in scenarios in which direct measurements are not possible.

In some implementations, determining an estimate of a content item's visibility can be made. The estimate can be based on the size of the browser's viewport, the size of the content item, and the content item's location relative to the browser's viewport. Measured and estimated values can be used to determine whether (and how much of) the content item is within view. However, this approach can be difficult when code that renders the content item, for example, is forced to run from within a frame (e.g., an iframe) with a domain distinct from the web page embedding the content item. For example, some browser security constraints can prevent access to one or more of these sizes and locations.

Some browsers may include proprietary APIs that are useful for working around cross-domain frame security constraints for the purpose of measuring/estimating content item visibility. As they are proprietary, they may not be included in any World Wide Web Consortium (W3C) specification or provided by any competing browsers, but can provide visibility-estimating solutions within some browsers.

In general, an estimate of a content item's visibility can be based on measures of the size of the viewport, the size of the content item, and the location of the content item relative to the viewport. The size of the content item can be estimated or measured directly, e.g., as content item frames are almost always sized to fit the content item. For example, if a publisher wants a 300-by-250-pixel content item, code for the content item can draw a rectangular frame with the same dimensions. In some implementations, a given frame can measure its own size by reading properties such as window.innerWidth and window.innerHeight, which can be standard WC3-specification values available in most modern browsers.

The size of the viewport can be estimated in various ways. In some implementations, the size of the viewport can be estimated, e.g., based on an outer bound by measuring window.outerWidth and window.outerHeight. These calls are available in most modern browsers. The window height and width values can include area occupied by elements that may diminish the available space for presenting web content. Examples of these elements include scrollbars, universal resource locator (URL) bars, bookmarks bar, and other browser "chrome" elements. The true web page viewing area, e.g., in which the content item is visible, does not include these chrome elements.

In some implementations, more accurate estimates of the web page viewing area can be accomplished by using correction factors, e.g., based on measured or estimated sizes of chrome elements. For example, corrections can be made for the area occupied by the browser header, which can be the chrome element that is often the largest source of error, e.g., the discrepancy between the web page viewing area and the browser window. In some implementations, browser header size can be based on historical measurements of window.outerHeight, e.g., based on gathered statistical data over time. These values can be compared to direct measurements of viewport height, e.g., using document.documentElement.clientHeight. The difference between the two values can represent the error, e.g., which can approximate the header size in many cases.

In some implementations, header size information can be collected and stored for different combinations of operating system and browser version. The values that are stored can be determined using, for example, conservative estimates. That is, an 80th percentile header size can be stored that represents a size of at least 80 percent of the sampled headers. Other thresholds can be selected. In some implementations, values can be selected that are based on percentiles or some other statistical grouping of each major combination of browser version and operating system (OS) version. For example, stored values can be based on an 80th percentile sampling; that is, for each major OS-browser combination, a height value can be selected that is a height greater than 80% of the measured headers. Subtracting this value from window.outerHeight can provide a much better estimate of viewport size, and this calculation can occur while monitoring content item visibility.

The location of the content item, e.g., with respect to the viewport, can be determined in various ways. In some implementations, when the location of the content item cannot be measured directly, browser-provided proprietary properties or other features can be used. As an example, Firefox-specific APIs can be used to calculate window.screenX, window.screenY, window.mozInnerScreenX, and window.mozInnerScreenY. ScreenX and screen can provide the location (e.g., the top-left corner) of the viewport in monitor screen coordinates, and mozInnerScreenX/Y can provide the location (e.g., the top-left corner) of the frame in screen coordinates. Normalizing these values to viewport coordinates can be done by subtracting the viewport location from the frame location. For example, if the browser's location is (200, 500) and the frame's location is (250, 510) in screen coordinates, then a determination can be made that the content item is located at (50, 10) in viewport coordinates.

Calculating how much of the content item is visible can be accomplished in different ways. In some implementations, the area of overlap of the two rectangles (e.g., the browser window and the frame) can represent the portion of the content item that is visible to the user. In some implementations, dividing this area by that of the entire content item can provide the percentage of the content item that is visible.

In some implementations, a time element can be used in order to establish visibility. For example, some systems use a 3 millisecond standard measure for content item visibility, and 50% of the content item must be visible in order to count as being viewed. In some implementations, a standard can designate that a content item must be 50% visible for one second to be considered visible. To establish this visibility standard, the above calculation can be repeated every second. If any two consecutive calculations indicate that the content item is at least 50% viewable, then it can be assumed that the content item has been viewed.

In some implementations, the techniques described in this document can be used for other purposes in addition to measuring/predicting content item visibility. For example, the techniques can also be used for above-the-fold detection, e.g., based on visibility measurements at page-load time. In another example, the techniques can also be used for spam detection, e.g., by identifying content item placements that never get viewed.

In some implementations, more accurate position estimates can be achieved by measuring the width of scrollbars and then correcting for that size when applicable. For example, the measurement of the scrollbar width can be made using a JavaScript method or in other ways.

In some implementations, the header height can be estimated in different ways. For example, the estimates can use more conservative values (e.g., 90th percentile), more aggressive values (e.g., 60th percentile), a flat value (e.g., 150 pixels). In some implementations (such as those for presentation on devices with limited screen size (e.g., mobile devices)) the estimates used may not account for any or a limited number of chrome features.

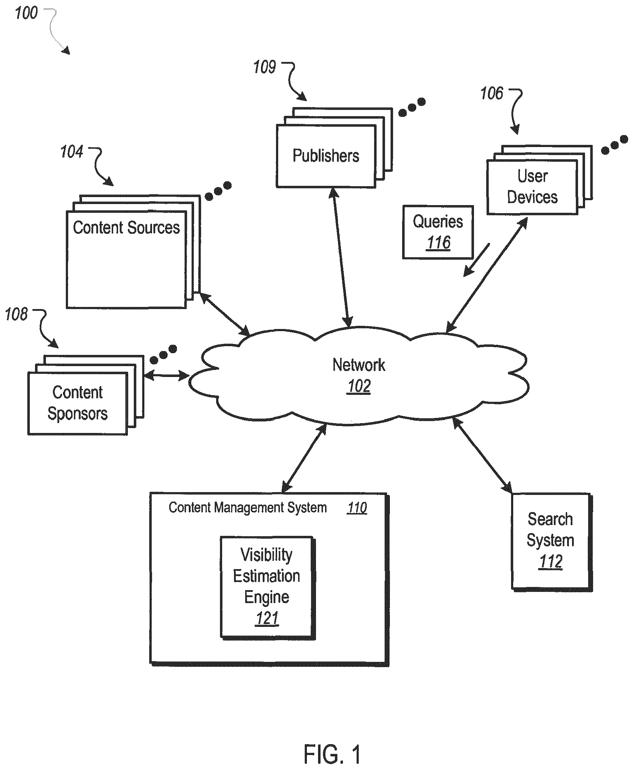

FIG. 1 is a block diagram of an example environment 100 for delivering content. The example environment 100 includes a content management system 110 for selecting and providing content in response to requests for content. The example environment 100 includes a network 102, such as a local area network (LAN), a wide area network (WAN), the Internet, or a combination thereof. The network 102 connects content sources 104, user devices 106, content sponsors 108 (e.g., advertisers), publishers 109, and the content management system 110. The example environment 100 may include many thousands of content sources 104, user devices 106, content sponsors 108 and publishers 109.

A content source 104 can be a repository for any data that can be provided over the network 102. Content can include various forms of content such as advertisements, HTML content, textual content, images and video to name only a few. The individual content items can include words, phrases, images, video and sounds, and may include embedded information (such as meta-information hyperlinks) and/or embedded instructions (such as JavaScript™ scripts).

A user device 106 is an electronic device that is under control of a user and is capable of requesting and receiving resources over the network 102. Example user devices 106 include personal computers (PCs), televisions with one or more processors embedded therein or coupled thereto, set-top boxes, mobile communication devices (e.g., smartphones), tablet computers and other devices that can send and receive data over the network 102. A user device 106 typically includes one or more user applications, such as a web browser, to facilitate the sending and receiving of data over the network 102.

A user device 106 can request content from content sources 104. In turn, data representing the content item can be provided to the user device 106 for presentation by the user device 106.

To facilitate searching of these content items, the environment 100 can include a search system 112 that identifies the content items and indexes the content items, such as using selection criteria (e.g., keywords) associated with a given content item included in the content sources 104.

User devices 106 can submit search queries 116 to the search system 112 over the network 102, such as a query to locate content items for presentation on the user device 106. In response, the search system 112 accesses the content sources to identify content items that are relevant to the search query 116. When content is requested by a user device 106, the content management system 110 receives a request for content.

Based at least in part on data included in the request, the content management system 110 can select content that is eligible to be provided in response to the request ("eligible content items") along with conventional search results. For example, eligible content items can include eligible ads having characteristics matching the characteristics of the spaces that have been identified. In some implementations, the selection of the eligible content items can further depend on user signals, such as demographic signals and behavioral signals.

The content management system 110 can select from the eligible content items that are to be provided for presentation based at least in part on results of an auction (or by some other selection process). For example, for the eligible content items, the content management system 110 can receive offers from content sponsors 108 and allocate content responsive to received requests, based at least in part on the received offers (e.g., based on the highest bidders at the conclusion of the auction or based on other criteria, such as those related to satisfying open reservations). The offers represent the amounts that the content sponsors are willing to pay for presentation (or selection or other interaction with) of their content. For example, an offer can specify an amount that a content sponsor is willing to pay for each 1000 impressions (i.e., presentations) of the content item, referred to as a CPM bid. Alternatively, the offer can specify an amount that the content sponsor is willing to pay (e.g., a cost per engagement) for a selection (i.e., a click-through) of the content item or a conversion following selection of the content item. For example, the selected content item can be determined based on the offers alone, or based on the offers of each content sponsor being multiplied by one or more factors, such as quality scores derived from content performance and/or other factors.

The content management system 110 can include plural engines. For example, a visibility estimation engine 121 can estimate the visibility of a content item presented on the user device 106.

A conversion can be said to occur when a user performs a particular transaction or action related to a content item that has been provided. What constitutes a conversion may vary from case-to-case and can be determined in a variety of ways. For example, a conversion may occur when a user clicks on a content item (e.g., an ad), is referred to a webpage, and consummates a purchase there before leaving that webpage. A conversion can also be defined by a content provider to be any measurable or observable user action, such as downloading a white paper, navigating to at least a given depth of a website, viewing at least a certain number of webpages, spending at least a predetermined amount of time on a web site or webpage, registering on a website, or experiencing media. Other actions that constitute a conversion can also be used.

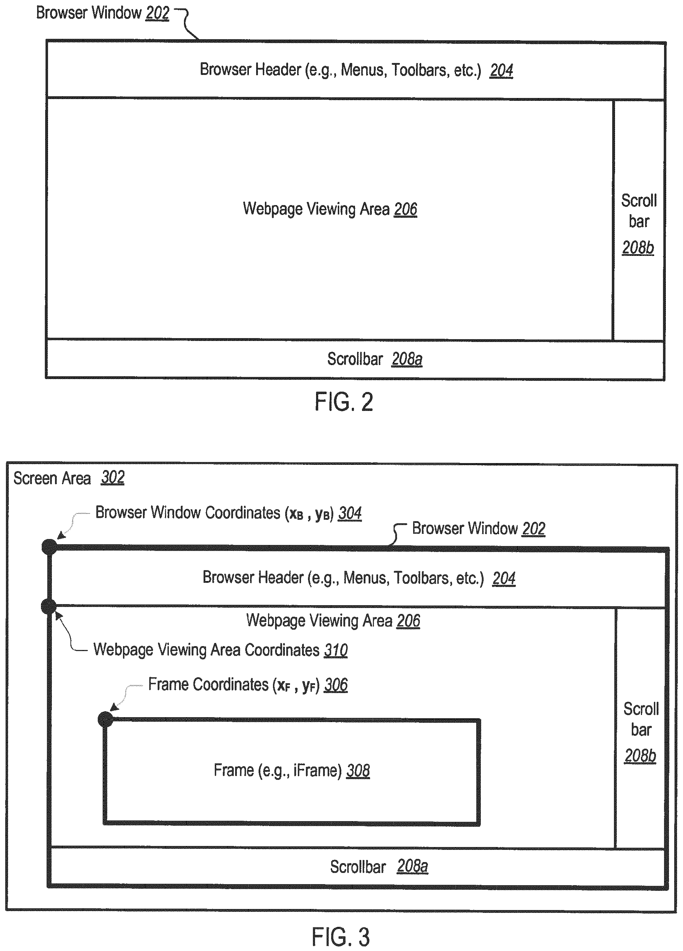

FIG. 2 shows an example browser window 202 and elements contained within. For example, browser window 102 contains a browser header 204 (e.g., including menus, toolbars and other header elements), a webpage viewing area 206, and scrollbars 208a and 208b. In some implementations, browser window 202 can contain other elements that together with the browser header 204 and 208a-208b can reduce the size of the webpage viewing area 206 and thus the area in which content is presented. Thus, in this example, the size of the browser window 202 may not provide an accurate representation of the size of the webpage viewing area 206. While the example in FIG. 2 is associated with browsers and browser viewing areas, the same sorts of techniques can be used for webpages and webpage viewing areas.

In order to determine a more accurate size of the webpage viewing area 206, adjustments can be made, e.g., relative to the known or estimated size of the browser window 202 and other information. In some implementations, the adjustments can be based on known menu/toolbar and scrollbar element sizes for common and/or major browsers for which the information is available. For example, by running experiments and sampling sizes and positions of menus/toolbars and scrollbars for different browsers and versions of operating systems, information can be stored for later use in determining real-time adjustments to browser window size to estimate webpage viewing area.

In some implementations, webpage viewing area can be estimated using browser window properties (e.g., outerWidth and outerHeight). This can identify the outer width and height of the browser window, including all interface elements (e.g., menus, toolbars, scrollbars, etc.), even if the properties are from a cross-domain frame. For example, many major browsers can provide properties or other information that can identify the width and height of the browser window to roughly estimate the webpage viewing area. However, the browser window size includes toolbars, scrollbars and any other non-content elements in the window. This all-inclusive size is usually larger than the webpage viewing area where the actual content (e.g., including advertisements) is rendered.

Another factor in determining visibility of a content item is the content items position within the viewport. In one example, the position of a content item can be determined based on the x/y coordinate of the frame (e.g., iFrame) that contains the content item. For example, the position of an advertisement within a viewport can be determined by comparing the x,y coordinate of the frame associated with the advertisement with the x/y coordinate of the browser window.

FIG. 3 shows an example screen area 302 that contains a browser window. For example, the screen area 302 can contain the browser window 202 described above. In some implementations, some operating systems and/or browsers can provide properties (e.g., window.screenX and window.screenY) that identify one or more corner coordinates of a browser window, e.g., in terms of screen coordinates. For example, the properties can identify browser window coordinates 304 as the x,y coordinates (e.g., coordinates $(x_B, y_B)$) of the upper-left-hand corner of the browser window 202.

In some implementations, other properties (e.g., window.mozInnerScreenX/Y) provided by some operating systems and/or browsers can identify one or more corner coordinates of a frame, e.g., also in terms of screen coordinates. For example, the properties can identify frame coordinates 306 as the x,y coordinates (e.g., coordinates $(x_F, y_F)$) of the upper-left-hand corner of frame 308 (e.g., an iFrame). Because the browser window coordinates 304 and frame coordinates 306 are each relative to the screen coordinate system, the position of frame 308 can be determined relative to the browser window 202, as well as estimated relative to the webpage viewing area 206. This technique, for example, can be used to determine the position of an advertisement within a browser window.

In some implementations, the position of the frame 308 relative to the browser window 202 can be inferred by obtaining a difference in the coordinates of the browser window coordinates 304 and the frame coordinates 306. For example, the frame 308 can be calculated as a difference (e.g., $(x_F-x_B, y_F-y_B)$).

In some implementations, the position of the frame 308 can be adjusted based on estimates of header menu/toolbar sizes described above in order to estimate the frame 308 relative to the upper left-hand corner of the webpage viewing area 206. For example, webpage viewing area coordinates 310 can be estimated using browser window coordinates 304 and subtracting the height of the browser header 204.

In some implementations, the position of the frame 308 can be determined using other techniques, such as firing a mouse event to obtain the frame coordinates 306 (e.g., coordinates $(x_F, y_F)$). For example, a listener can be attached to the frame's document using attachEvent instead of addEventListener. From within the frame, calling fireEvent('onmousemove') can trigger the newly-added listener. The event's $x_{CLIENT}$ and $y_{CLIENT}$ can be the offset of the mouse from the frame, while the event's $x_{SCREEN}$, $y_{SCREEN}$ are its position on the screen. The difference in the screen and client values can result e.g., in:

$$x_F = x_{SCREEN} - x_{CLIENT},$$

and

$$y_F = y_{SCREEN} - y_{CLIENT}$$

that are needed to determine visibility.

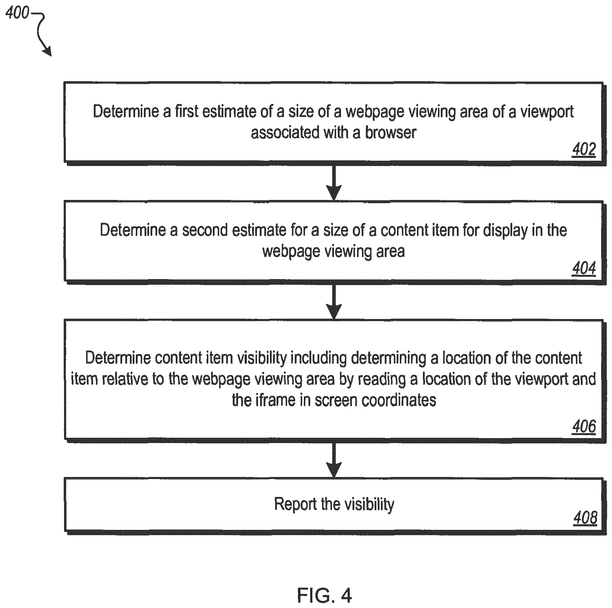

FIG. 4 is a flowchart of an example process 400 for determining content visibility for a content item included in a cross-domain iframe. In some implementations, the content management system 110 and the visibility estimation engine 121 can perform stages of the process 400 using instructions that are executed by one or more processors. FIGS. 1-3 are used to provide example structures for performing the steps of the process 400.

A first estimate is determined for a size of a webpage viewing area of a viewport associated with a browser(402). For example, the content management system 110 can determine the size of the webpage viewing area 206. In some implementations, determining the first estimate can include subtracting from a size of the webpage viewing area an estimated size of one or more chrome elements. In some implementations, determining the first estimate can include subtracting an estimated size of a browser header from the size of the browser viewport. In some implementations, determining the first estimate can include subtracting an estimated size for a browser header and a scrollbar.

In some implementations, determining the first estimate can further include performing a statistical analysis to determine an average (or some other mathematical construct such as mean) size of the one or more chrome elements. For example, samples, including sizes of browser heights, can be collected over time based on pairs of operating systems and browsers, and the information can be stored until needed.

A second estimate is determined for a size of a content item (e.g., an advertisement) for display in the webpage viewing area, including reading iframe inside measurements for the iframe from a browser (404).

In some implementations, determining the second estimate can include approximating the size of the content item as being a same size as an inside portion of the iframe. In some implementations, determining the location of the content item further includes using an API of the browser (e.g., Firefox) to locate the viewport and the iframe in screen coordinates.

Content item visibility is determined, including determining a location of the content item relative to the webpage viewing area by reading a location of the viewport and the iframe in screen coordinates (406).

In some implementations, determining the content item visibility can further include and compensate for an estimated size of the one or more chrome elements in the viewport. For example, the visibility estimation engine 121 can determine that the content item's visibility is the size of the viewport decreased by the size of the browser header 204 and scrollbars 208a-208b.

In some implementations, determining content item visibility further includes calculating how much of the content item is visible by determining an area of overlap of two rectangles, the first rectangle defined by the location of the browser viewport and the estimate of the browser viewing area, and the second rectangle defined by the location of the iframe and the size of the content item.

The visibility is reported (408). For example, the content management system 110 can provide information about the content item's visibility to the content sponsor 108 associated with the content item.

In some implementations, the process 400 can further comprise determining the content item is being displayed in a cross-domain iframe. For example, the content management system 110 need only to estimate the visibility of a content item when direct measurements are not possible.

In some implementations, reporting the visibility further includes reporting to a content sponsor whether the content item was visible when presented to a user in association with a delivery of the content item to the cross-domain iframe. For example, the content management system 110 can report to the content sponsor 108 that the content sponsor's content item (e.g., an advertisement) was or was not visible.

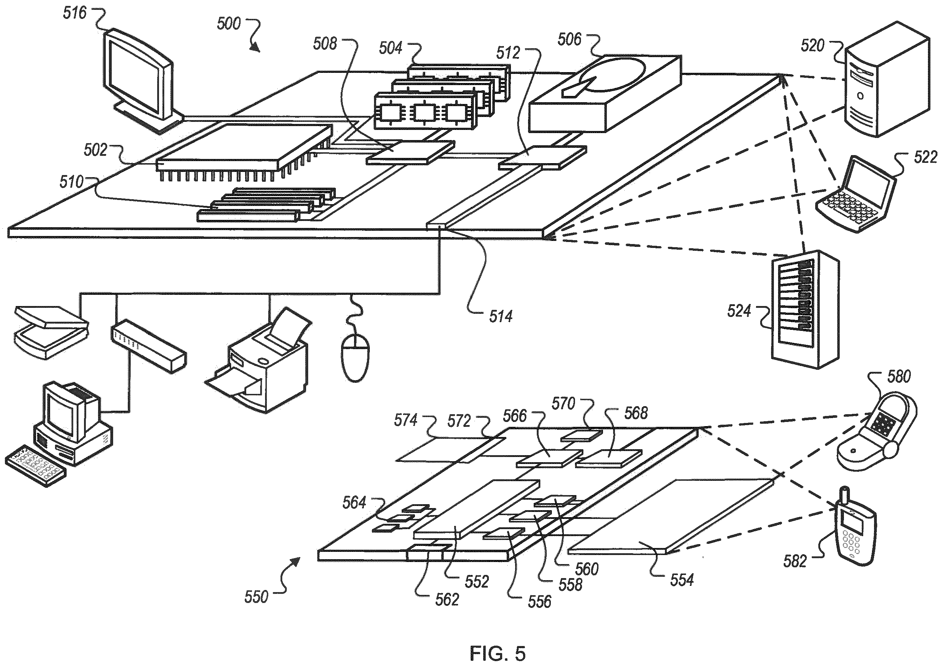

FIG. 5 is a block diagram of example computing devices 500, 550 that may be used to implement the systems and methods described in this document, as either a client or as a server or plurality of servers. Computing device 500 is intended to represent various forms of digital computers, such as laptops, desktops, workstations, personal digital assistants, servers, blade servers, mainframes, and other appropriate computers. Computing device 500 is further intended to represent any other typically non-mobile devices, such as televisions or other electronic devices with one or more processers embedded therein or attached thereto. Computing device 550 is intended to represent various forms of mobile devices, such as personal digital assistants, cellular telephones, smartphones, and other computing devices. The components shown here, their connections and relationships, and their functions, are meant to be examples only, and are not meant to limit implementations of the inventions described and/or claimed in this document.

Computing device 500 includes a processor 502, memory 504, a storage device 506, a high-speed interface 508 connecting to memory 504 and high-speed expansion ports 510, and a low speed interface 512 connecting to low speed bus 514 and storage device 506. Each of the components 502, 504, 506, 508, 510, and 512, are interconnected using various busses, and may be mounted on a common motherboard or in other manners as appropriate. The processor 502 can process instructions for execution within the computing device 500, including instructions stored in the memory 504 or on the storage device 506 to display graphical information for a GUI on an external input/output device, such as display 516 coupled to high speed interface 508. In other implementations, multiple processors and/or multiple buses may be used, as appropriate, along with multiple memories and types of memory. Also, multiple computing devices 500 may be connected, with each device providing portions of the necessary operations (e.g., as a server bank, a group of blade servers, or a multi-processor system).

The memory 504 stores information within the computing device 500. In one implementation, the memory 504 is a computer-readable medium. In one implementation, the memory 504 is a volatile memory unit or units. In another implementation, the memory 504 is a non-volatile memory unit or units.

The storage device 506 is capable of providing mass storage for the computing device 500. In one implementation, the storage device 506 is a computer-readable medium. In various different implementations, the storage device 506 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 504, the storage device 506, or memory on processor 502.

The high speed controller 508 manages bandwidth-intensive operations for the computing device 500, while the low speed controller 512 manages lower bandwidth-intensive operations. Such allocation of duties is an example only. In one implementation, the high-speed controller 508 is coupled to memory 504, display 516 (e.g., through a graphics processor or accelerator), and to high-speed expansion ports 510, which may accept various expansion cards (not shown). In the implementation, low-speed controller 512 is coupled to storage device 506 and low-speed expansion port 514. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 500 may be implemented in a number of different forms, as shown in the figure. For example, it may be implemented as a standard server 520, or multiple times in a group of such servers. It may also be implemented as part of a rack server system 524. In addition, it may be implemented in a personal computer such as a laptop computer 522. Alternatively, components from computing device 500 may be combined with other components in a mobile device (not shown), such as device 550. Each of such devices may contain one or more of computing device 500, 550, and an entire system may be made up of multiple computing devices 500, 550 communicating with each other.

Computing device 550 includes a processor 552, memory 564, an input/output device such as a display 554, a communication interface 566, and a transceiver 568, among other components. The device 550 may also be provided with a storage device, such as a micro-drive or other device, to provide additional storage. Each of the components 550, 552, 564, 554, 566, and 568, are interconnected using various buses, and several of the components may be mounted on a common motherboard or in other manners as appropriate.

The processor 552 can process instructions for execution within the computing device 550, including instructions stored in the memory 564. The processor may also include separate analog and digital processors. The processor may provide, for example, for coordination of the other components of the device 550, such as control of user interfaces, applications run by device 550, and wireless communication by device 550.

Processor 552 may communicate with a user through control interface 558 and display interface 556 coupled to a display 554. The display 554 may be, for example, a TFT LCD display or an OLED display, or other appropriate display technology. The display interface 556 may comprise appropriate circuitry for driving the display 554 to present graphical and other information to a user. The control interface 558 may receive commands from a user and convert them for submission to the processor 552. In addition, an external interface 562 may be provided in communication with processor 552, so as to enable near area communication of device 550 with other devices. External interface 562 may provide, for example, for wired communication (e.g., via a docking procedure) or for wireless communication (e.g., via Bluetooth or other such technologies).

The memory 564 stores information within the computing device 550. In one implementation, the memory 564 is a computer-readable medium. In one implementation, the memory 564 is a volatile memory unit or units. In another implementation, the memory 564 is a non-volatile memory unit or units. Expansion memory 574 may also be provided and connected to device 550 through expansion interface 572, which may include, for example, a subscriber identification module (SIM) card interface. Such expansion memory 574 may provide extra storage space for device 550, or may also store applications or other information for device 550. Specifically, expansion memory 574 may include instructions to carry out or supplement the processes described above, and may include secure information also. Thus, for example, expansion memory 574 may be provide as a security module for device 550, and may be programmed with instructions that permit secure use of device 550. In addition, secure applications may be provided via the SIM cards, along with additional information, such as placing identifying information on the SIM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 564, expansion memory 574, or memory on processor 552.

Device 550 may communicate wirelessly through communication interface 566, which may include digital signal processing circuitry where necessary. Communication interface 566 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 568. In addition, short-range communication may occur, such as using a Bluetooth, WiFi, or other such transceiver (not shown). In addition, GPS receiver module 570 may provide additional wireless data to device 550, which may be used as appropriate by applications running on device 550.

Device 550 may also communicate audibly using audio codec 560, which may receive spoken information from a user and convert it to usable digital information. Audio codec 560 may likewise generate audible sound for a user, such as through a speaker, e.g., in a handset of device 550. Such sound may include sound from voice telephone calls, may include recorded sound (e.g., voice messages, music files, etc.) and may also include sound generated by applications operating on device 550.

The computing device 550 may be implemented in a number of different forms, as shown in the figure. For example, it may be implemented as a cellular telephone 580. It may also be implemented as part of a smartphone 582, personal digital assistant, or other mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. Other programming paradigms can be used, e.g., functional programming, logical programming, or other programming. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front- end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method (400) for determining content visibility when a content item is included in a cross-domain iframe (308), comprising:

    determining (402) a first estimate of a size of a webpage viewing area (206) of a browser window (202) associated with a browser including (i) reading, from inside the iframe (308), an outer bound for size of the browser window (202), (ii) performing a statistical analysis to determine an average size of one or more browser elements (204, 208a, 208b) including determining a browser header (204) size based on historical measurements that are gathered as statistical data, and (iii) subtracting from the size of the browser window (202) the average size of the one or more browser elements (204, 208a, 208b);
    determining (404) a second estimate for a size of the content item for display in the webpage viewing area (206), including reading iframe inside measurements for the iframe (308) from the browser;
    determining (406) content item visibility including determining of a location of the content item relative to the webpage viewing area (206) by reading a location of the browser window (202) and, from inside the iframe (308), a location of the iframe (308) in screen coordinates and calculating how much of the content item is visible by determining an area of overlap of two rectangles, the first rectangle defined by the location of the browser window (202) and the estimate of the webpage viewing area (206), and the second rectangle defined by the location of the iframe (308) and the size of the content item; and reporting (408) information about the visibility of the content item to a content sponsor.

2. The method of claim 1, wherein determining the first estimate includes one of subtracting an estimated size of a browser header (204) from the size of the browser window (202) and subtracting an estimated size for a browser header (204) and a scrollbar (208a, 208b).

3. The method of claim 1, wherein determining the second estimate includes approximating the size of the content item as being a same size as an inside portion of the iframe (308).

4. The method of claim 1, wherein determining the location of the content item further includes using an API of the browser to locate the browser window (202) and the iframe (308) in screen coordinates.

5. The method of claim 4, wherein the browser is a Firefox browser.

6. The method of claim 1, wherein reporting the visibility further includes reporting to the content sponsor (108) whether the content item was visible when presented to a user in association with a delivery of the content item to the cross-domain iframe (308).

7. The method of claim 1, wherein the content item is an advertisement.

8. A computer program product embodied in a tangible medium including instructions, that when executed, cause one or more processors to:

    determine (402) a first estimate of a size of a webpage viewing area (206) of a browser window (202) associated with a browser including (i) reading, from inside the iframe (308), an outer bound for size of the browser window (202), (ii) performing a statistical analysis to determine an average size of one or more browser elements (204, 208a, 208b) including determining a browser header (204) size based on historical measurements that are gathered as statistical data, and (iii) subtracting from the size of the browser window (202) the average size of the one or more browser elements (204, 208a, 208b);
    determine (404) a second estimate for a size of the content item for display in the webpage viewing area (206), including reading iframe inside measurements for the iframe (308) from the browser;

determine (406) content item visibility including determining of a location of the content item relative to the webpage viewing area (206) by reading a location of the browser window (202) and, from inside the iframe (308), a location of the iframe (308) in screen coordinates and calculating how much of the content item is visible by determining an area of overlap of two rectangles, the first rectangle defined by the location of the browser window (202) and the estimate of the webpage viewing area (206), and the second rectangle defined by the location of the iframe (308) and the size of the content item; and report (408) information about the visibility of the content item to a content sponsor.

9. The computer program product of claim 8, wherein determining the first estimate Includes subtracting an estimated size of a browser header (204) from the size of the browser window (202).

10. A system comprising:

one or more processors; and
one or more memory elements including instructions that, when executed, cause the one or more processors to:

determine (402) a first estimate of a size of a webpage viewing area (206) of a browser window (202) associated with a browser including (i) reading, from inside the iframe (308), an outer bound for size of the browser window (202), (ii) performing a statistical analysis to determine an average size of one or more browser elements (204, 208a, 208b) including determining a browser header (204) size based on historical measurements that are gathered as statistical data, and (iii) subtracting from the size of the browser window (202) the average size of the one or more browser elements (204, 208a, 208b);
determine (404) a second estimate for a size of the content item for display in the webpage viewing area (206), including reading iframe inside measurements for the iframe (308) from the browser;
determine (406) content item visibility including determining of a location of the content item relative to the webpage viewing area (206) by reading a location of the browser window (202) and, from inside the iframe (308), a location of the iframe (308) in screen coordinates and calculating how much of the content item is visible by determining an area of overlap of two rectangles, the first rectangle defined by the location of the browser window (202) and the estimate of the webpage viewing area (206), and the second rectangle defined by the location of the iframe (308) and the size of the content item; and
report (408) information about the visibility of the content item to a content sponsor.

**Patentansprüche**

1. Computerimplementiertes Verfahren (400) zum Bestimmen von Inhaltssichtbarkeit, wenn ein Inhaltselement in einem domänenübergreifenden iFrame (308) eingeschlossen ist, umfassend:

Bestimmen (402) einer ersten Schätzung einer Größe eines Webseiten-Betrachtungsbereichs (206) eines Browserfensters (202), das mit einem Browser assoziiert ist, einschließend (i) Lesen, aus dem Inneren des iFrames (308), einer äußeren Begrenzung für eine Größe des Browserfensters (202), (ii) Durchführen einer statistischen Analyse zum Bestimmen einer durchschnittlichen Größe eines oder mehrerer Browserelemente (204, 208a, 208b), das Bestimmen einer Größe eines Browserkopfes (204) einschließend basierend auf historischen Messungen, die als statistische Daten erfasst werden, und (iii) Subtrahieren der durchschnittlichen Größe des einen oder der mehreren Browserelemente (204, 208a, 208b) von der Größe des Browserfensters (202);
Bestimmen (404) einer zweiten Schätzung einer Größe des Inhaltselements zur Anzeige in dem Webseiten-Betrachtungsbereich (206), das Lesen von iFrame-Innenmessungen einschließend für den iFrame (308) von dem Browser;
Bestimmen (406) einer Inhaltselementsichtbarkeit, das Bestimmen eines Orts des Inhaltselements einschließend relativ zu dem Webseiten-Betrachtungsbereich (206) durch Lesen eines Orts des Browserfensters (202) und, aus einem Inneren des iFrames (308), eines Orts des iFrames (308) in Bildschirmkoordinaten und das Berechnen, wie viel des Inhaltselements sichtbar ist, durch Bestimmen eines Überlappungsbereichs von zwei Rechtecken, wobei das erste Rechteck durch den Ort des Browserfensters (202) und die Schätzung des Webseiten-Betrachtungsbereichs (206) definiert ist, und das zweite Rechteck durch den Ort des iFrames (308) und die Größe des Inhaltselements definiert ist; und
Berichten (408) von Informationen über die Sichtbarkeit des Inhaltselements an einen Inhaltssponsor.

**2.** Verfahren nach Anspruch 1, wobei das Bestimmen der ersten Schätzung eines von Subtrahieren einer geschätzten Größe eines Browserkopfes (204) von der Größe des Browserfensters (202) und Subtrahieren einer geschätzten Größe für einen Browserkopf (204) und eine Bildlaufleiste (208a, 208b) enthält.

**3.** Verfahren nach Anspruch 1, wobei das Bestimmen der zweiten Schätzung die Größe des Inhaltselements anzunähern einschließt, die eine gleiche Größe wie ein Innenabschnitt des iFrames (308) ist.

**4.** Verfahren nach Anspruch 1, wobei das Bestimmen des Orts des Inhaltselements ferner enthält, eine API des Browsers zu verwenden, um das Browserfenster (202) und den iFrame (308) in Bildschirmkoordinaten zu lokalisieren.

**5.** Verfahren nach Anspruch 4, wobei der Browser ein Firefox-Browser ist.

**6.** Verfahren nach Anspruch 1, wobei das Berichten der Sichtbarkeit ferner enthält, an den Inhaltssponsor (108) zu berichten, ob das Inhaltselement sichtbar war, als es einem Benutzer in Assoziation mit einer Lieferung des Inhaltselements an den domänenübergreifenden iFrame (308) präsentiert wurde.

**7.** Verfahren nach Anspruch 1, wobei das Inhaltselement eine Werbung ist.

**8.** Computerprogrammprodukt, in einem fühlbaren Medium eingebettet, das Anweisungen enthält, die, wenn sie ausgeführt werden, einen oder mehrere Prozessoren veranlassen zum:

Bestimmen (402) einer ersten Schätzung einer Größe eines Webseiten-Betrachtungsbereichs (206) eines Browserfensters (202), das mit einem Browser assoziiert ist, einschließend (i) Lesen, aus dem Inneren des iFrames (308), einer äußeren Begrenzung für eine Größe des Browserfensters (202), (ii) Durchführen einer statistischen Analyse zum Bestimmen einer durchschnittlichen Größe eines oder mehrerer Browserelemente (204, 208a, 208b), einschließend das Bestimmen einer Größe eines Browserkopfes (204) basierend auf historischen Messungen, die als statistische Daten erfasst werden, und (iii) Subtrahieren der durchschnittlichen Größe des einen oder der mehreren Browserelemente (204, 208a, 208b) von der Größe des Browserfensters (202);

Bestimmen (404) einer zweiten Schätzung einer Größe des Inhaltselements zur Anzeige in dem Webseiten-Betrachtungsbereich (206), das Lesen von iFrame-Innenmessungen einschließend für den iFrame (308) von dem Browser; Bestimmen (406) einer Inhaltselementsichtbarkeit, einschließend das Bestimmen eines Orts des Inhaltselements relativ zu dem Webseiten-Betrachtungsbereich (206) durch Lesen eines Orts des Browserfensters (202) und, aus einem Inneren des iFrames (308), eines Orts des iFrames (308) in Bildschirmkoordinaten und das Berechnen, wie viel des Inhaltselements sichtbar ist, durch Bestimmen eines Überlappungsbereichs von zwei Rechtecken, wobei das erste Rechteck durch den Ort des Browserfensters (202) und die Schätzung des Webseiten-Betrachtungsbereichs (206) definiert ist, und das zweite Rechteck durch den Ort des iFrames (308) und die Größe des Inhaltselements definiert ist; und

Berichten (408) von Informationen über die Sichtbarkeit des Inhaltselements an einen Inhaltssponsor

**9.** Computerprogrammprodukt nach Anspruch 8, wobei das Bestimmen der ersten Schätzung enthält, eine geschätzte Größe eines Browserkopfes (204) von der Größe des Browserfensters (202) zu subtrahieren.

**10.** System, umfassend:

einen oder mehrere Prozessoren; und ein oder mehrere Speicherelemente, die Anweisungen einschließen, die, wenn sie ausgeführt werden, den einen oder die mehreren Prozessoren veranlassen zum:

Bestimmen (402) einer ersten Schätzung einer Größe eines Webseiten-Betrachtungsbereichs (206) eines Browserfensters (202), das mit einem Browser assoziiert ist, einschließend (i) Lesen, aus dem Inneren des iFrames (308), einer äußeren Begrenzung für eine Größe des Browserfensters (202), (ii) Durchführen einer statistischen Analyse zum Bestimmen einer durchschnittlichen Größe eines oder mehrerer Browserelemente (204, 208a, 208b), einschließend das Bestimmen einer Größe eines Browserkopfes (204) basierend auf historischen Messungen, die als statistische Daten erfasst werden, und (iii) Subtrahieren der durchschnittlichen Größe des einen oder der mehreren Browserelemente (204, 208a, 208b) von der Größe des Browserfensters (202);

Bestimmen (404) einer zweiten Schätzung einer Größe des Inhaltselements zur Anzeige in dem Webseiten-Betrachtungsbereich (206), einschließend das Lesen von iFrame-Innenmessungen für den iFrame (308) von dem Browser;

Bestimmen (406) einer Inhaltselementsichtbarkeit, einschließend das Bestimmen eines Orts des Inhaltselements relativ zu dem Webseiten-Betrachtungsbereich (206) durch Lesen eines Orts des Browserfensters (202) und, aus einem Inneren des iFrames (308), eines Orts des iFrames (308) in Bildschirmkoordinaten und Berechnen, wie viel des Inhaltselements sichtbar ist, durch Bestimmen eines Überlappungsbereichs von zwei Rechtecken, wobei das erste Rechteck durch den Ort des Browserfensters (202) und die Schätzung des Webseiten-Betrachtungsbereichs (206) definiert ist, und das zweite Rechteck durch den Ort des iFrames (308) und die Größe des Inhaltselements definiert ist; und Berichten (408) von Informationen über die Sichtbarkeit des Inhaltselements an einen Inhaltssponsor.

## Revendications

**1.** Procédé mis en œuvre par ordinateur (400) pour déterminer la visibilité d'un contenu lorsqu'un élément de contenu est inclus dans un iFrame inter-domaine (308), comprenant :

la détermination (402) d'une première estimation d'une dimension d'une aire de visualisation de page Web (206) d'une fenêtre de navigateur (202) qui est associée à un navigateur incluant (i) la lecture, depuis l'intérieur de l'iFrame (308), d'une limite externe pour la dimension de la fenêtre de navigateur (202), (ii) la réalisation d'une analyse statistique pour déterminer une dimension moyenne d'un ou de plusieurs éléments de navigateur (204, 208a, 208b) incluant la détermination d'une dimension d'en-tête de navigateur (204) sur la base de mesures historiques qui sont collectées en tant que données statistiques, et (iii) la soustraction, vis-à-vis de la dimension de la fenêtre de navigateur (202), de la dimension moyenne des un ou plusieurs éléments de navigateur (204, 208a, 208b); la détermination (404) d'une seconde estimation pour une dimension de l'élément de contenu pour son affichage dans l'aire de visualisation de page Web (206), incluant la lecture de mesures intérieures de l'iFrame pour l'iFrame (308) à partir du navigateur ; la détermination (406) de la visibilité d'élément de contenu incluant la détermination d'une localisation de l'élément de contenu par rapport à l'aire de visualisation de page Web (206) en lisant une localisation de la fenêtre de navigateur (202) et, depuis l'intérieur de l'iFrame (308), d'une localisation de l'iFrame (308) dans des coordonnées d'écran et le calcul du degré de visibilité de l'élément de contenu en déterminant une aire de chevauchement de deux rectangles, le premier rectangle étant défini par la localisation de la fenêtre de navigateur (202) et par l'estimation de l'aire de visualisation de page Web (206), et le second rectangle étant défini par la localisation de l'iFrame (308) et par la dimension de l'élément de contenu ; et la communication (408) de l'information concernant la visibilité de l'élément de contenu à un sponsor de contenu.

**2.** Procédé selon la revendication 1, dans lequel la détermination de la première estimation inclut une parmi une soustraction d'une dimension estimée d'un en-tête de navigateur (204) vis-à-vis de la dimension de la fenêtre de navigateur (202) et la soustraction d'une dimension estimée pour un en-tête de navigateur (204) et une barre de défilement (208a, 208b).

**3.** Procédé selon la revendication 1, dans lequel la détermination de la seconde estimation inclut l'approximation de la dimension de l'élément de contenu comme étant une même dimension que celle d'une partie interne de l'iFrame (308).

**4.** Procédé selon la revendication 1, dans lequel la détermination de la localisation de l'élément de contenu inclut en outre l'utilisation d'une API du navigateur pour localiser la fenêtre de navigateur (202) et l'iFrame (308) dans des coordonnées d'écran.

**5.** Procédé selon la revendication 4, dans lequel le navigateur est un navigateur Firefox.

**6.** Procédé selon la revendication 1, dans lequel la communication de la visibilité inclut en outre la communication, au sponsor de contenu (108), de si l'élément de contenu était visible lorsqu'il a été présenté à un utilisateur en association avec une délivrance de l'élément de contenu sur l'iFrame inter-domaine (308).

**7.** Procédé selon la revendication 1, dans lequel l'élément de contenu est une publicité.

**8.** Progiciel mis en œuvre sur un support tangible qui inclut des instructions qui, lorsqu'elles sont exécutées, ont pour effet qu'un ou plusieurs processeurs :

déterminent (402) une première estimation d'une dimension d'une aire de visualisation de page Web (206) d'une fenêtre de navigateur (202) qui est associée à un navigateur incluant (i) la lecture, depuis l'intérieur de l'iFrame (308), d'une limite externe pour la dimension de la fenêtre de navigateur (202), (ii) la réalisation d'une analyse statistique pour déterminer une dimension moyenne d'un ou de plusieurs éléments de navigateur (204, 208a, 208b) incluant la détermination d'une dimension d'un en-tête de navigateur (204) sur la base de mesures historiques qui sont collectées en tant que données statistiques et (iii) la soustraction, vis-à-vis de la dimension de la fenêtre de navigateur (202), de la dimension moyenne des un ou plusieurs éléments de navigateur (204, 208a, 208b);

déterminent (404) une seconde estimation pour une dimension de l'élément de contenu pour son affichage dans l'aire de visualisation de page Web (206), incluant la lecture de mesures intérieures de l'iFrame pour l'iFrame (308) à partir du navigateur ;

déterminent (406) la visibilité d'élément de contenu incluant la détermination d'une localisation de l'élément de contenu par rapport à l'aire de visualisation de page Web (206) en lisant une localisation de la fenêtre de navigateur (202) et, depuis l'intérieur de l'iFrame (308), d'une localisation de l'iFrame (308) dans des coordonnées d'écran et le calcul du degré de visibilité de l'élément de contenu en déterminant une aire de chevauchement de deux rectangles, le premier rectangle étant défini par la localisation de la fenêtre de navigateur (202) et par l'estimation de l'aire de visualisation de page Web (206), et le second rectangle étant défini par la localisation de l'iFrame (308) et par la dimension de l'élément de contenu ; et

communiquent (408) l'information concernant la visibilité de l'élément de contenu à un sponsor de contenu.

9. Progiciel selon la revendication 8, dans lequel la détermination de la première estimation inclut la soustraction d'une dimension estimée d'un en-tête de navigateur (204) vis-à-vis de la dimension de la fenêtre de navigateur (202).

10. Système comprenant :

un ou plusieurs processeurs ; et
un ou plusieurs éléments de mémoire incluant des instructions qui, lorsqu'elles sont exécutées, ont pour effet que les un ou plusieurs processeurs :

déterminent (402) une première estimation d'une dimension d'une aire de visualisation de page Web (206) d'une fenêtre de navigateur (202) qui est associée à un navigateur incluant (i) la lecture, depuis l'intérieur de l'iFrame (308), d'une limite externe pour la dimension de la fenêtre de navigateur (202), (ii) la réalisation d'une analyse statistique pour déterminer une dimension moyenne d'un ou de plusieurs éléments de navigateur (204, 208a, 208b) incluant la détermination d'une dimension d'un en-tête de navigateur (204) sur la base de mesures historiques qui sont collectées en tant que données statistiques et (iii) la soustraction, vis-à-vis de la dimension de la fenêtre de navigateur (202), de la dimension moyenne des un ou plusieurs éléments de navigateur (204, 208a, 208b);

déterminent (404) une seconde estimation pour une dimension de l'élément de contenu pour son affichage dans l'aire de visualisation de page Web (206), incluant la lecture de mesures intérieures de l'iFrame pour l'iFrame (308) à partir du navigateur ;

déterminent (406) la visibilité d'élément de contenu incluant la détermination d'une localisation de l'élément de contenu par rapport à l'aire de visualisation de page Web (206) en lisant une localisation de la fenêtre de navigateur (202) et, depuis l'intérieur de l'iFrame (308), d'une localisation de l'iFrame (308) dans des coordonnées d'écran et le calcul du degré de visibilité en déterminant une aire de chevauchement de deux rectangles, le premier rectangle étant défini par la localisation de la fenêtre de navigateur (202) et par l'estimation de l'aire de visualisation de page Web (206), et le second rectangle étant défini par la localisation de l'iFrame (308) et par la dimension de l'élément de contenu ; et

communiquent (408) l'information concernant la visibilité de l'élément de contenu à un sponsor de contenu.

FIG. 1

Browser Window 202

| Browser Header (e.g., Menus, Toolbars, etc.) 204 |  |
|---|---|
| Webpage Viewing Area 206 | Scroll bar 208b |
| Scrollbar 208a | |

FIG. 2

Screen Area 302

Browser Window Coordinates (x_B , y_B) 304

Browser Window 202

Browser Header (e.g., Menus, Toolbars, etc.) 204

Webpage Viewing Area 206

Webpage Viewing Area Coordinates 310

Frame Coordinates (x_F , y_F) 306

Scroll bar 208b

Frame (e.g., iFrame) 308

Scrollbar 208a

FIG. 3

400

Determine a first estimate of a size of a webpage viewing area of a viewport
associated with a browser

*402*

Determine a second estimate for a size of a content item for display in the
webpage viewing area

*404*

Determine content item visibility including determining a location of the content
item relative to the webpage viewing area by reading a location of the viewport and
the iframe in screen coordinates

*406*

Report the visibility

*408*

FIG. 4

FIG. 5

EP 2 976 719 B1

**EP 2 976 719 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011072048 A2
- US 20110196735 A1
- US 20120079366 A1
- US 20110029393 A1